# EUROPÄISCHE PATENTANMELDUNG

(11) **EP 0 890 483 A2**
(43) Veröffentlichungstag der Anmeldung: **13.01.1999**
(21) Anmeldenummer: 98112021.5
(22) Anmeldetag: 30.06.1998
(51) Int. Cl.: B60R 16/02

(54) **Einrichtung zur Anpassung von Steuereinrichtungen eines Kraftfahrzeugs**

(30) Priorität: 07.07.1997 DE 19728925
(71) Anmelder: ROBERT BOSCH GMBH, 70442 Stuttgart (DE)
(72) Erfinder: Mindl, Anton, 31141 Hildesheim (DE); Blischke, Frank, 31141 Hildesheim (DE); Schmidt, Heinrich, 31199 Diekholzen (DE)

(57) **Zusammenfassung**

Bei einer Einrichtung zur Anpassung von Steuereinrichtungen eines Kraftfahrzeugs an äußere Bedingungen, vorzugsweise Wetterbedingungen, sind über ein im Kraftfahrzeug befindliches Kommunikationsmodul Meldungen, welche die äußeren Einflüsse betreffen, von einer zentralen Einrichtung empfangbar und auswertbar. Die ausgewerteten Meldungen sind den Steuereinrichtungen zuführbar.

## Beschreibung

Die Erfindung betrifft eine Einrichtung zur Anpassung von Steuereinrichtungen eines Kraftfahrzeugs an äußere Bedingungen, vorzugsweise Wetterbedingungen.

In Kraftfahrzeugen werden heutzutage verschiedene Steuereinrichtungen zu einem sogenannten Fahrzeugmanagementsystem zusammengefaßt. Durch dieses können verschiedene Komponenten des Kraftfahrzeugs, wie beispielsweise der Motor oder das Getriebe im Sinne verschiedener Ziele, beispielsweise Fahrsicherheit, geringe Schadstoffemission und Fahrkomfort, gesteuert werden. So wird beispielsweise die Gemischaufbereitung als Funktion der Lufttemperatur optimiert oder Veränderungen der Fahrdynamik als Funktion der Geschwindigkeit.

Bei modernen Kraftfahrzeugen sind ferner Parameter dieser Steuerungen durch den Fahrer eingebbar, beispielsweise bei einer elektronischen Steuerung eines automatischen Getriebes der Parameter Sommerbetrieb oder Winterbetrieb. Beim Winterbetrieb werden zum vorsichtigeren Anfahren die unteren Getriebegänge nicht eingelegt.

Aufgabe der vorliegenden Erfindung ist es, die Steuereinrichtungen der eingangs genannten Art an äußere Bedingungen automatisch anzupassen, ohne die Aufmerksamkeit des Fahrers in Anspruch zu nehmen.

Diese Aufgabe wird erfindungsgemäß dadurch gelöst, daß über ein im Kraftfahrzeug befindliches Kommunikationsmodul Meldungen, welche die äußeren Einflüsse betreffen, von einer zentralen Einrichtung empfangbar und auswertbar sind und daß die ausgewerteten Meldungen den Steuereinrichtungen zuführbar sind.

Mit der erfindungsgemäßen Einrichtung wird eine vorausschauende Optimierung der im Kraftfahrzeug vorhandenen Steuereinrichtungen möglich und damit ein Beitrag zur Verkehrssicherheit geleistet. Gegenüber dem Stand der Technik werden Synergieeffekte zwischen Kommunikations- und Fahrzeugelektronik für Autofahrer nutzbar gemacht.

Da die äußeren Bedingungen, insbesondere die Wetterbedingungen, wesentlich vom jeweiligen Ort des Kraftfahrzeugs abhängen, wird eine Weiterbildung vorgeschlagen, die darin besteht, daß die empfangbaren Meldungen die äußeren Bedingungen jeweils eines Ortes, an welchem sich das Kraftfahrzeug befindet, betreffen und daß eine Ortungseinrichtung im Kraftfahrzeug vorgesehen ist, welche den jeweiligen Ort des Kraftfahrzeugs ermittelt und eine Selektion der die äußeren Einflüsse betreffenden Meldungen bewirkt.

Bei dieser Weiterbildung kann vorgesehen sein, daß Meldungen von mehreren Sendern empfangbar sind und daß die Ortungseinrichtung eine Vergleichseinrichtung umfaßt, mit der jeweils empfangene Sender mit einer Sendertabelle verglichen werden und daraus der Ort des Kraftfahrzeugs ermittelt wird. Eine andere Ausgestaltung dieser Weiterbildung besteht darin, daß die Ortungseinrichtung eine Satellitennavigationseinrichtung ist.

Für die Übertragung der Meldungen können verschiedene Einrichtungen verwendet werden, beispielsweise Senderketten, welche als RDS-Signale digital codierte Verkehrsmeldungen aussenden, oder Mobilfunknetze. In beiden Fällen können von den zugehörigen Sendern für größere Gebiete jeweils eine Vielzahl von Meldungen gesendet werden, die verschiedene Orte innerhalb der Gebiete betreffen. Dafür kann bei einer erfindungsgemäßen Einrichtung vorgesehen sein, daß im Kraftfahrzeug eine Selektionseinrichtung vorgesehen ist, welche aus den jeweils empfangenen Meldungen die für den Ort des Fahrzeugs gültigen Meldungen selektiert.

Eine andere Weiterbildung der Erfindung besteht darin, daß das Kommunikationsmodul ein Endgerät eines Mobilfunknetzes ist und daß Daten, welche den jeweiligen Ort des Fahrzeugs wiedergeben, zur zentralen Einrichtung übertragen werden, so daß von der zentralen Einrichtung den jeweiligen Ort gültige Meldungen abgerufen werden.

Die erfindungsgemäße Einrichtung kann zur Anpassung beliebiger Steuereinrichtungen vorgesehen sein. Besonders vorteilhaft ist es jedoch, wenn die Steuereinrichtungen die Fahrdynamik des Kraftfahrzeugs, insbesondere das Beschleunigungsverhalten, das Bremsverhalten und/oder die vom Kraftfahrzeug erreichbare Höchstgeschwindigkeit beeinflussen.

Vorzugsweise ist bei der erfindungsgemäßen Einrichtung vorgesehen, daß die empfangbaren Meldungen Informationen zu witterungsbedingten Straßenverhältnissen und/oder Sichtverhältnissen enthalten.

Ausführungsbeispiele der Erfindung sind in der Zeichnung anhand mehrerer Figuren dargestellt und in der nachfolgenden Beschreibung näher erläutert. Es zeigt:
- Fig. 1: ein erstes Ausführungsbeispiel als Blockschaltbild,
- Fig. 2: ebenfalls in Form eines Blockschaltbildes ein zweites Ausführungsbeispiel und
- Fig. 3: ein Flußdiagramm zur Erläuterung der wichtigsten Funktionsabläufe in der erfindungsgemäßen Einrichtung.

Gleiche Teile sind in den Figuren mit gleichen Bezugszeichen versehen.

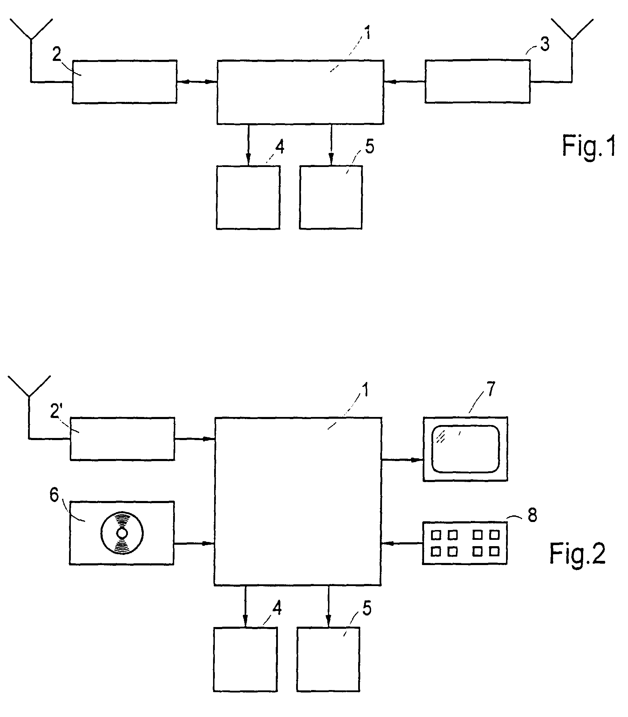

Das Ausführungsbeispiel gemäß Fig. 1 enthält als Kommunikationsmodul ein Endgerät 2 eines Mobilfunknetzes und einen GPS-Empfänger 2. Ein Fahrzeugmanagementsystem 1 steuert und überwacht zahlreiche Funktionen innerhalb des Kraftfahrzeugs. Von diesen sind eine Motorsteuerung 4 und eine Fahrdynamikregelung 5 bei dem Blockschaltbild nach Fig. 1 dargestellt.

Der GPS-Empfänger 3 ermittelt laufend den Ort des Kraftfahrzeugs, der von dem Fahrzeugmanagementsystem 1 über das Endgerät 2 und das nicht dargestellte Mobilfunknetz einer zentralen Einrichtung zugeführt wird. Dort werden für den jeweiligen Ort des Kraftfahrzeugs gültige Meldungen generiert, beispielsweise eine Glatteis- oder Nebelbildungsmeldung, die wiederum über das Mobilfunknetz und das Endgerät 2 dem Fahrzeugmanagementsystem 1 zugeleitet werden. Die empfangene Meldung wird dort ausgewertet und falls erforderlich der Motorsteuerung 4 oder der Fahrdynamikregelung 5 als Vorgabewerte zugeführt. Im Falle der Motorsteuerung kann dieses beispielsweise eine vorgegebene Höchstgeschwindigkeit sein, die einer Geschwindigkeitsregelungseinrichtung als Sollwert zugeführt wird. Im Falle einer Glatteiswarnung kann beispielsweise sowohl ein Eingriff in die Motorsteuerung 4 als auch ein Eingriff in die Fahrdynamikregelung 5 vorgenommen werden, was eine Begrenzung der Beschleunigungskräfte bewirkt.

Bei dem Ausführungsbeispiel nach Fig. 2 ist als Kommunikationsmodul ein Empfänger 2', der zum Empfang und zur Decodierung von RDS-Signalen mit digital codierten Verkehrsmeldungen (TMC) eingerichtet ist, vorgesehen. Zur Ortsbestimmung werden die über den Empfänger 2' empfangbaren Sender, die durch einen Suchlauf ermittelt werden, mit in einem Speicher 6, beispielsweise einem CD-ROM, gespeicherten Senderdaten verglichen. Ein weiterer Vergleich kann ebenfalls mit einer auf dem CD-ROM 6 gespeicherten Straßenkarte vorgenommen werden, so daß auch ohne Satellitenortungseinrichtung eine relativ genaue Ortsbestimmung möglich ist.

Bei diesem Beispiel ist keine bidirektionale Verbindung zur Zentraleinheit vorgesehen. Es ist daher erforderlich, daß mit Hilfe des Empfängers 2' für eine größere Region alle benötigten Daten empfangen werden, die dann durch Vergleich mit den im Fahrzeugmanagementsystem gewonnenen Ortsangaben entsprechend selektiert werden.

Bei dem Ausführungsbeispiel nach Fig. 2 ist ferner ein Display 7 vorgesehen, bei dem die empfangenen Informationen sichtbar gemacht werden. Ferner ist eine Tastatur 8 angeschlossen für eine gegebenenfalls erforderlich werdende Bedienung. So kann beispielsweise vorgesehen sein, daß der durch eine empfangene Meldung ausgeloste Eingriff in das Fahrzeugverhalten generell oder im Einzelfall abgeschaltet werden kann.

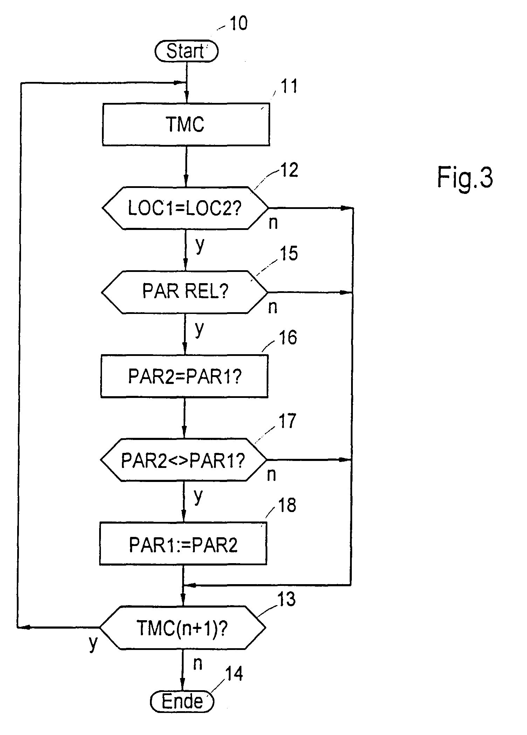

Fig. 3 zeigt die Funktion der erfindungsgemäßen Einrichtung als Ablaufdiagramm, das letztlich auch ein in dem Fahrzeugmanagementsystem 1 implementiertes Programm wiedergibt. Nach einem Start bei 10 wird bei 11 eine Meldung TMC von der Kommunikationseinheit 2 (Fig. 1) oder 2' (Fig. 2) abgeholt und decodiert. Eine solche Meldung - im TMC-System als Ereignis codiert - kann beispielsweise sein "Gefahr durch Straßenglätte" oder "starker Schneefall". Bei 12 wird die Ortsangabe LOC2 innerhalb der Meldung mit dem derzeitigen Ort LOC1 des Kraftfahrzeugs verglichen. Liegt keine Übereinstimmung vor, wird das Programm bei 13 mit einer Entscheidung fortgesetzt in Abhängigkeit davon, ob weitere Meldungen TMC(n+1) vorliegen. Ist dieses der Fall, wird das Programm bei 11 wiederholt, anderenfalls bei 14 beendet.

Wird jedoch bei 12 festgestellt, daß die Meldung TMC den derzeitigen Ort des Kraftfahrzeugs betrifft, wird bei 15 geprüft, ob die Meldung Parameter PAR enthalten, die für einen Eingriff in das Fahrzeugmanagementsystem relevant sind. Bei den obengenannten Ereignissen trifft dieses zu. Betrifft jedoch die Meldung ein Ereignis, das nicht zu einer automatischen Änderung der Fahrdynamik führen soll, wird das Programm bei 13 fortgesetzt.

Auf die Verzweigung 15 folgt zutreffendenfalls ein Vergleich 16, der durch die Meldung bedingten Parameter PAR2 (beispielsweise Aktivierung des Winterbetriebes für ein elektronisches Getriebe) mit den bereits im Kraftfahrzeug gesetzten Parametern PAR1. Sind die Parameter PAR1 bereits im Sinne der empfangenen Meldung gesetzt, beispielsweise weil der Fahrer schon manuell auf "Winterbetrieb" umgeschaltet hat, folgt auf die Verzweigung 17 keine Aktion. Sind jedoch die Paramter PAR2, PAR1 unterschiedlich, werden die zuvor gültigen Parameter PAR1 an die durch die empfangenen Meldung bedingten Parameter PAR2 bei 18 angepaßt und das Programm mit der Verzweigung 13 fortgesetzt.

## Patentansprüche

1. Einrichtung zur Anpassung von Steuereinrichtungen eines Kraftfahrzeugs an äußere Bedingungen, vorzugsweise Wetterbedingungen, dadurch gekennzeichnet, daß über ein im Kraftfahrzeug befindliches Kommunikationsmodul (2, 2') Meldungen, welche die äußeren Einflüsse betreffen, von einer zentralen Einrichtung empfangbar und auswertbar sind und daß die ausgewerteten Meldungen den Steuereinrichtungen (1, 4, 5) zuführbar sind.

2. Einrichtung nach Anspruch 1, dadurch gekennzeichnet, daß die empfangbaren Meldungen die äußeren Bedingungen jeweils eines Ortes, an welchem sich das Kraftfahrzeug befindet, betreffen und daß eine Ortungseinrichtung (3, 6) im Kraftfahrzeug vorgesehen ist, welche den jeweiligen Ort des Kraftfahrzeugs ermittelt und eine Selektion der die äußeren Einflüsse betreffenden Meldungen bewirkt.

3. Einrichtung nach Anspruch 2, dadurch gekennzeichnet, daß Meldungen von mehreren Sendern empfangbar sind und daß die Ortungseinrichtung (6) eine Vergleichseinrichtung umfaßt, mit der jeweils empfangene Sender mit einer Sendertabelle verglichen werden und daraus der Ort des Kraftfahrzeugs ermittelt wird.

4. Einrichtung nach Anspruch 2, dadurch gekennzeichnet, daß die Ortungs-Einrichtung eine Satellitennavigationseinrichtung (3) ist.

5. Einrichtung nach einem der vorhergehenden Ansprüche, dadurch gekennzeichnet, daß im Kraftfahrzeug eine Selektionseinrichtung (1) vorgesehen ist, welche aus den jeweils empfangenen Meldungen die für den Ort des Fahrzeugs gültigen Meldungen selektiert.

6. Einrichtung nach einem der Ansprüche 1 bis 4, dadurch gekennzeichnet, daß das Kommunikationsmodul ein Endgerät (2) eines Mobilfunknetzes ist und daß Daten, welche den jeweiligen Ort des Fahrzeugs wiedergeben, zur zentralen Einrichtung übertragen werden, so daß von der zentralen Einrichtung den jeweiligen Ort gültige Meldungen abgerufen werden.

7. Einrichtung nach einem der vorhergehenden Ansprüche, dadurch gekennzeichnet, daß die Steuereinrichtungen (1, 4, 5) die Fahrdynamik des Kraftfahrzeugs beeinflussen.

8. Einrichtung nach Anspruch 7, dadurch gekennzeichnet, daß die Steuereinrichtungen (1, 4, 5) das Beschleunigungsverhalten, das Bremsverhalten und/oder die vom Kraftfahrzeug erreichbare Höchstgeschwindigkeit beeinflussen.

9. Einrichtung nach einem der vorhergehenden Ansprüche, dadurch gekennzeichnet, daß die empfangbaren Meldungen Informationen zu witterungsbedingten Straßenverhältnissen und/oder Sichtverhältnissen enthalten.
